# EUROPEAN PATENT SPECIFICATION

(11) **EP 1 200 730 B1**
(45) Date of publication and mention of the grant of the patent: **04.12.2002**
(21) Application number: 00942291.6
(22) Date of filing: 05.07.2000
(51) Int. Cl.: F02P 9/00, F02B 1/04, F02B 75/02

(54) **METHOD OF OPERATING AN INTERNAL COMBUSTION ENGINE**
VERFAHREN ZU DEM BETRIEB EINER BRENNKRAFTMASCHINE
PROCEDE DE FONCTIONNEMENT D'UN MOTEUR A COMBUSTION INTERNE

(30) Priority: 05.08.1999 GB 9918396
(43) Date of publication of application: 02.05.2002
(73) Proprietor: Ford Global Technologies, Inc., Dearborn, Michigan 48136 (US)
(72) Inventor: MA, Thomas, Tsoi-Hei, Essex CM3 5YL (GB)
(74) Representative: Messulam, Alec Moses
(86) International application number: GB0002600
(87) International publication number: WO01011233

(56) References cited:
- EP-A- 0 434 217
- WO-A-99/42718
- GB-A- 2 277 776
- US-A- 5 027 764
- US-A- 5 211 142

## Description

### Field of the invention

The present invention relates to a method of operating a spark ignition internal combustion engine under low and medium load conditions which comprises supplying to the engine a fuel and air charge and raising the temperature and pressure of the charge to cause at least part of the charge to ignite spontaneously.

### Background of the invention

Spontaneous combustion in spark ignited internal combustion engines is known and has generally been regarded as undesirable as it normally manifests itself as knock when the engine is operating under high load and as such is a cause of severe engine damage. Spontaneous combustion differs from normal combustion in that, in the place of a controlled burning of the charge by flame propagation from a spark, there is a detonation when the charge effectively explodes and generates a very high combustion pressure.

More recently, it has been realised that though such spontaneous ignition should indeed be avoided under high load operating conditions, it has advantages if it can be induced at lower engine loads in that it produces cleaner emission gases (much lower NOx in particular) and allows leaner mixtures to be burnt completely. However, such combustion is difficult to control and various systems have been proposed to achieve controlled spontaneous combustion, also termed auto-ignition.

Of course auto-ignition occurs all the time in compression ignition engines, such as diesel engine. In such engines, auto-ignition is controlled by not introducing fuel into the air charge until after the charge has been compressed and the mixture is ignited spontaneously as soon as the fuel is injected under high pressure. The present invention is not concerned with such high compression engines, where the compression ratio is typically around 20:1, but with spark ignition engines, such as petrol engines, where the charge is premixed and the compression ratio is typically around only 10:1. The engine of the invention is spark ignited at high load and controlled auto-ignition is relied upon only under lower engine loads to improve emissions and lean burn capability. For this reason, increasing the compression ratio to assist auto-ignition is not an available option as the engine would not be able to operate at high load.

Earlier proposals for promoting controlled auto-ignition in a premixed charge engine have included heating the intake air, using high levels of internal EGR (where the gases are naturally still hot), or using a lower octane fuel.

### Object of the invention

The present invention seeks to provide a method of operating a spark ignition engine under low and medium load conditions to promote auto-ignition while allowing normal spark ignition of the charge under high load operating conditions.

### Summary of the invention

In accordance with the present invention, there is provided a method of operating an internal combustion engine under low and medium load conditions which comprises supplying to the engine a fuel and air charge that is not spark ignitable and exposing the charge to a series of sparks during the early part of the compression stroke to create within the charge high energy gas pockets, the sparks promoting subsequent spontaneous combustion (auto-ignition) of the gases in the high energy pockets towards the end of the compression stroke or during the early part of the power stroke.

US 4,846,129 discloses a lean burn engine in which the lean burn limit is extended by using a series of sparks instead of a single spark to ignite the mixture. The sparks are not used to promote auto-ignition but to ignite the mixture. On the contrary, steps are taken to ensure that auto-ignition is avoided at all times.

In the present invention, the pre-mixed fuel/air main charge is ignitable neither by a single spark nor by multiple sparks on account of the high dilution ratio, that is to say a high air/fuel ratio or a high proportion of recirculated exhaust gases. Instead the sparks serve only to ionise and heat the charge locally, producing a series of high energy gas pockets that are carried along by in-cylinder charge motion and distributed widely throughout the main charge. When these high energy gas pockets are further compressed and heated, they reach the auto-ignition temperature and spontaneously ignite.

The sparks thus induce spontaneous ignition of the high energy gas pockets at a later stage in the engine cycle and the combustion system may be regarded as being a spark induced compression ignition (SICI) system. The entire charge does not however spontaneously ignite but burns by flame propagation between the high energy gas pockets. Nevertheless, because of the numerous high energy pockets and the shorter flame propagation distances involved, the combustion of the charge will be completed in a shorter time than in a conventional spark ignition engine.

This combustion mechanism is to be contrasted with the known systems in which controlled auto-ignition is achieved by heating the intake air to increase the average charge temperature at the beginning of the compression stroke. In this prior art proposal, when the charge is compressed, its temperature will rise sufficiently towards the end of the compression stroke to exceed the auto-ignition temperature, whereupon the whole charge will auto-ignite.

In this invention, the high energy gas pockets are produced in the main charge during the early part of the compression stroke and will be hotter than the main charge. Even allowing for some cooling because of thermal conduction and fluid mixing, these gas pockets when compressed along with the main charge will reach a higher temperature than the main charge towards the end of the compression stroke, sufficiently to reach the auto-ignition temperature earlier, whereupon the high energy gas pockets will auto-ignite and initiate combustion across the main charge.

The strong tendency for the high energy gas pockets to auto-ignite is on account of the fact that these gas pockets are not only hot but also highly ionised. By varying the intensity, frequency and timing of the sparks occurring at the beginning of the compression stroke, it is possible to control the instant at which auto-ignition of the high energy gas pockets will occur later in the cycle.

As a failsafe against the possibility that there may not be sufficient energy in the gas pockets to induce auto-ignition towards the end of the compression stroke, it is possible to avoid a non-firing cycle by applying a stronger main ignition spark and, if desired, additionally introducing a pilot direct injection of rich fuel towards the spark plug at a last predetermined instant later than the expected instant of auto-ignition to initiate normal ignition. Such a failsafe main ignition spark will normally prove redundant as the charge will already be burning; it will nevertheless do not harm if combustion has already commenced. However, it will guarantee proper firing if for any reason, such as variation in fuel quality, the charge in the high energy pockets should fail to ignite spontaneously.

Even when the charge combustion is initiated by a conventionally timed ignition spark, the flame propagating outwards from the spark ignited kernel will compress the charge ahead of it and will further increase the pressure and temperature of the high energy gas pockets within the charge. The further temperature and pressure increase could eventually be sufficient to cause the gas pockets to auto-ignite. In this case the timing of auto-ignition would follow the timing of the main ignition spark, and is variable and controllable by controlling the timing of the main ignition spark.

Immediately after auto-ignition of the pre-mixed charge, more fuel may be injected into the hot charge and burnt as a diffusion flame at the rate it is injected. This could be used to consume more of the oxygen present in the charge and achieve higher loads without knock. This makes it possible to run a diesel engine by SICI without relying on a high compression ratio.

It will be appreciated that the invention may be applied to two-stroke and four-stroke internal combustion engines burning all kinds of fuels, such as gasoline, diesel, alcohol and gaseous fuels. When applied to a two-stroke engine, reference to "compression stroke" should be construed to mean the part of the up-stroke of the piston after the ports has been covered by the piston, during which period the charge is being compressed.

### Brief description of the drawings

The invention will now be described further, by way of example, with reference to the accompanying drawings, in which:
Figure 1 is a schematic diagram of the engine and its management system, and
Figure 2 is a graph showing the variation of the pressure within the combustion chamber with time during the compression and power periods of the engine cycle.

### Detailed description of the preferred embodiments

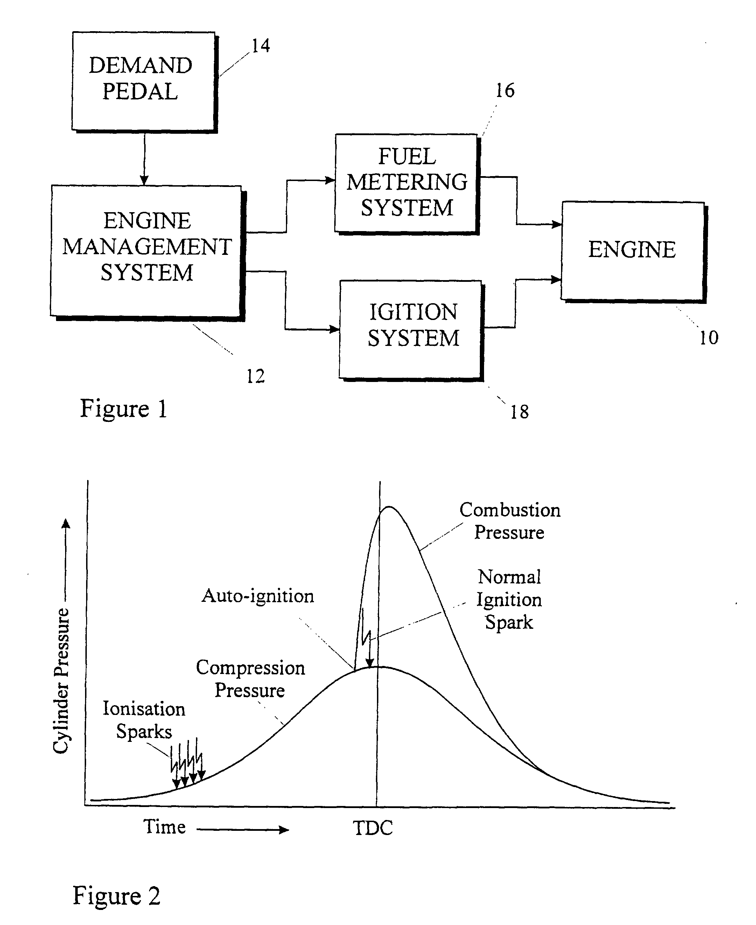

The block diagram of Figure 1 is generally conventional and shows schematically an engine 10 having a management system 12 which applies output signals to a fuel metering system 16 and a spark ignition system 18 in dependence upon various input signals, including one from a demand pedal 14.

The ignition system 18 needs to be capable of producing sparks rapidly so that numerous sparks are generated in the early part of the compression stroke. An ignition system with this capability has already been proposed that relies on forming nanometre sized fibres on to the end of a piezoelectric crystal to make a high voltage transformer. By applying a primary a.c. voltage of between 100V and 150V, it is claimed by the manufacturers of the transformer that an output voltage of up to 20kV can be produced at up to 40 kHz to drive a spark plug (see European Automotive Design, March 1999, Page 14).

The invention is concerned with the operation of an engine when under low and medium load and when supplied with a highly diluted fuel mixture. Such a mixture cannot support flame propagation because of the low concentration of the fuel in the charge and cannot for this reason be readily ignited, especially in the early part of the compression stroke when its temperature and pressure are both low.

To promote clean combustion, the invention proposes firing a series of sparks as shown in Figure 2 near the commencement of the compression stroke. Such sparking may continue for as long as the charge temperature and pressure are too low for the mixture to be ignited by the sparks. The effect of the sparks is not to ignite the mixture but to create pockets of high energy gases that are carried with the charge motion and distributed throughout the charge. When later in the cycle, the compression of the charge increases the pressure and temperature in these pockets, they undergo auto-ignition at the instant shown in Figure 2 preceding TDC. Auto-ignition occurs at the pockets almost simultaneously and initiates combustion of the main charge by flame propagation from numerous kernels so that the charge is consumed more rapidly than when it is initiated conventionally by a single ignition spark. This results in a higher and more sharply defined pressure peak as shown but localised high temperatures are avoided, thereby reducing the production of NOx. Because the engine at this time is not operated with a high load, the peak pressures are not so high as to risk damaging the engine. It is however important not to use SICI at high load as it could cause engine damage.

Figure 2 shows that a main spark is still fired before TDC in the conventional manner. However, this spark occurs after the expected timing of the auto-ignition and will normally serve no purpose. However, the spark does guarantee charge combustion in the event that auto-ignition does not occur as predicted for any reason. If the mixture is so lean that it would not be ignitable even near TDC, then it is possible to inject additional fuel directly into the combustion chamber and such injection is preferably directed towards the spark plugs to create a cloud of high fuel concentration in the vicinity of the spark gap. When the engine has a facility for in-cylinder fuel injection, it is possible to inject additional fuel after auto-ignition has occurred, to consume any surplus oxygen and produce more power from the engine without running into knock.

The timing of auto-ignition will depend on the energy stored in the high energy gas pockets and by varying the spark voltage, frequency and timing one can influence the instant at which auto-ignition occurs.

## Claims

1. A method of operating an internal combustion engine under low and medium load conditions which comprises supplying to the engine a fuel and air charge that is not spark ignitable and exposing the charge to a series of sparks during the early part of the compression stroke to create within the charge high energy gas pockets, the sparks promoting subsequent auto-ignition of the gases in the high energy pockets towards the end of the compression stroke or during the early part of the power stroke.

2. A method as claimed in claim 1, wherein the fuel and air charge is rendered non-ignitable by the series of sparks by setting a high dilution ratio of air or EGR gases to fuel.

3. A method as claimed in claim 1 or 2, wherein the intensity and/or frequency and/or timing of the series of sparks is/are adjustable to vary the energy stored in the high energy gas pockets.

4. A method as claimed in any preceding claim, wherein a main ignition spark is fired near top-dead-centre to ensure charge combustion in the event of failure of the high energy gas pockets to auto-ignite.

5. A method as claimed in claim 4, wherein a pilot direct injection of rich fuel is additionally introduced and directed towards the spark plug to ensure normal ignition of the charge.

6. A method as claimed in any preceding claim, wherein immediately after auto-ignition of the high energy gas pockets, additional fuel is injected into the engine cylinder to produce more power.

## Patentansprüche

1. Ein Verfahren um einen Verbrennungsmotor unter Bedingungen niedriger und mäßiger Last zu betreiben, welches Verfahren umfaßt eine Kraftstoff- und Luftladung an den Motor zu liefern die mit Funken nicht zündfähig ist, und die Ladung während des frühen Teils des Verdichtungshubes einer Reihe von Funken auszusetzen, um innerhalb der Ladung Gastaschen mit hoher Energie zu erzeugen; wobei die Funken gegen das Ende des Verdichtungshubes hin oder während des frühen Teils des Arbeitshubes eine nachfolgende spontane Verbrennung (Selbstzündung) der Gase in den Taschen mit hoher Energie fördern.

2. Ein Verfahren gemäß Anspruch 1, in dem die Kraftstoff- und Luftladung durch die Reihe von Funken nicht zündfähig gemacht wird, indem man ein hohes Verdünnungsverhältnis an Luft oder EGR-Gasen zu Kraftstoff einstellt.

3. Ein Verfahren gemäß Anspruch 1 oder 2 in dem die Intensität und/oder Frequenz und/oder der Zeitpunkt der Reihe von Funken einstellbar ist/sind, um die in den Gastaschen hoher Energie gespeicherte Energie zu variieren.

4. Ein Verfahren nach einem der vorstehenden Ansprüche, in dem ein Haupt-Zündfunke - im Falle eines Versagens der Gastaschen hoher Energie selber zu zünden - nahe dem oberen Totpunkt gezündet wird, um eine Ladungsverbrennung sicherzustellen.

5. Ein Verfahren gemäß Anspruch 5, in dem eine direkte Voreinspritzung an reichem Kraftstoff zusätzlich eingebracht und auf die Zündkerze hin gerichtet wird, um eine normale Zündung der Ladung sicherzustellen.

6. Ein Verfahren gemäß einem der vorstehenden Ansprüche, in dem sofort nach der Selbstzündung der Gastaschen hoher Energie zusätzlicher Kraftstoff in den Motorzylinder hinein eingespritzt wird, um mehr Leistung zu erzeugen.

## Revendications

1. Procédé de mise en oeuvre d'un moteur à combustion interne sous des conditions de charges faible et moyenne qui comprend la fourniture au moteur d'une charge de carburant et d'air qui ne peut pas être allumée par étincelle et l'exposition de la charge à une série d'étincelles durant le début de la course de compression afin de créer à l'intérieur de la charge des poches de gaz d'énergie élevée, les étincelles favorisant l'auto-allumage ultérieur des gaz dans les poches de gaz d'énergie élevée vers la fin de la course de compression ou durant le début de la course de détente.

2. Procédé selon la revendication 1, dans lequel la charge de carburant et d'air est rendue non allumable par la série d'étincelles en établissant un rapport de dilution élevé de l'air ou des gaz de recirculation RGE sur le carburant.

3. Procédé selon la revendication 1 ou 2, dans lequel l'intensité et/ou la fréquence et/ou le cadencement de la série d'étincelles est/sont ajustable(s) afin de faire varier l'énergie stockée dans les poches de gaz d'énergie élevée.

4. Procédé selon l'une quelconque des revendications précédentes, dans lequel une étincelle d'allumage principale est déclenchée à proximité du point mort haut afin d'assurer une combustion de charge dans le cas de l'échec des poches de gaz d'énergie élevée à s'auto-allumer.

5. Procédé selon la revendication 4, dans lequel une injection pilote directe de carburant riche est en outre introduite et dirigée vers la bougie d'allumage afin d'assurer un allumage normal de la charge.

6. Procédé selon l'une quelconque des revendications précédentes, dans lequel immédiatement après l'auto-allumage des poches de gaz d'énergie élevée, du carburant supplémentaire est injecté dans le cylindre du moteur afin de produire davantage de puissance.
